# EUROPÄISCHE PATENTANMELDUNG

(11) **EP 1 842 787 A2**
(43) Veröffentlichungstag der Anmeldung: **10.10.2007**
(21) Anmeldenummer: 07007073.5
(22) Anmeldetag: 04.04.2007
(51) Int. Cl.: B65D 35/46

(54) **Spender für viskose Medien mit Spenderbehälter, Ausdrückmechanismus und Spenderkanüle**

(30) Priorität: 05.04.2006 DE 102006016029
(71) Anmelder: Coltène/Whaledent GmbH + Co. KG, 89129 Langenau (DE)
(72) Erfinder: Müller, Barbara, 89129 Langenau (DE); Mannschedel, Werner, 89129 Langenau (DE); Schmid, Daniel, 9200 Gossau (CH)
(74) Vertreter: Forstmeyer, Dietmar

(57) **Zusammenfassung**

Die Erfindung betrifft einen Spender (1) für viskose Medien (3) mit Spenderbehälter (2), Ausdrückmechanismus und Spenderkanüle (5). Der Spenderbehälter (2) weist ein Mundstück (4) auf und der Ausdrückmechanismus übt einen Druck auf das viskose Medium (3) im Spenderbehälter (2) aus. Unter dem Druck wird das viskose Medium (3) über eine Öffnung (6) des Mundstücks (4) des Spenderbehälters (2) und durch die Spenderkanüle (5) herauspresst. Die Spenderkanüle (5) ist von dem Spenderbehälter (2) entfernbar und weist einen Sitz (7) für ein Rückhalteventil (8) auf, das zwischen dem Mundstück (4) mit Öffnung (6) und der Spenderkanüle (5) angeordnet ist.

## Beschreibung

Die Erfindung betrifft einen Spender mit Spenderbehälter für viskose Medien, wobei der Spenderbehälter ein Mundstück aufweist. Darüber hinaus weist der Spender einen Ausdrückmechanismus und eine Spenderkanüle auf. Der Ausdrückmechanismus übt einen Druck auf das viskose Medium im Spenderbehälter aus, so dass das viskose Medium über eine Öffnung in dem Mundstück des Spenderbehälters und durch die Spenderkanüle herausgepresst wird.

Ein derartiger Spender kann auch eine Tube aufweisen, die als viskoses Medium Klebstoff, Putzmittel, Lebensmittel und/oder Hygienemittel, wie Zahnpasta oder Cremes aufweist. Der Ausdrückmechanismus wird bei derartigen Tuben durch Verformen der Tube verursacht. Dabei wird nach Öffnen der Öffnung des Mundstücks das viskose Mittel entweder aus der Mundstücköffnung direkt, oder nach Vorsetzen einer Kanüle, aus der Kanüle ausgepresst. Das Verhalten des viskosen Mediums im Bereich des Mundstücks bzw. der Öffnung hängt dabei einerseits von der Beschaffenheit des viskosen Mediums und andererseits von dem Material der Tube ab.

Ist beispielsweise die Tube aus Kunststoff, der ein begrenztes Formengedächtnis aufweist und/oder elastisch ist, so wird beim Nachlassen des Andrucks das viskose Medium in die Tube zurückgezogen, was mit dem Nachteil verbunden ist, dass auch Luft in den Spenderbehälter eindringen und zu Veränderungen sowohl bei Zahnpasta, als auch bei Klebstoffen oder Lebensmitteln führen und die Haltbarkeitsdauer beeinträchtigen kann. Besteht der Spenderbehälter aus einem Weichmetall, so ergibt sich häufig der Nachteil eines Nachlaufens des viskosen Mediums aus der Öffnung des Mundstücks bzw. aus der Spitze der nachgeschalteten Spenderkanüle. Dieses Nachlaufen ist besonders bei viskosen Medien beträchtlich, wenn komprimierbare Gaseinschlüsse im Medium vorhanden sind, die nach dem Ausdrückvorgang dekomprimieren und somit ein erhebliches Nachlaufen des Mediums zur Folge haben.

Besonders gravierend wirkt sich das bei Lebensmitteltuben aus, die der Versorgung von Personal im schwerelosen Raum dienen sollen. In diesem Fall ist sowohl ein Nachlaufen nach Verabreichung eines Teils des Spenderbehälterinhalts als auch ein Einsaugen von Luft in den Spenderbehälter von Nachteil. In dem ersteren Fall besteht die Gefahr, dass sich der nachlaufende Anteil des Lebensmittels als Tropfen im schwerelosen Raum verselbständigt und in dem letzteren Fall wird die Haltbarkeitsdauer des Lebensmittels durch Einsaugen von Luft vermindert.

Jedoch auch unter Erdschwere sind beide Effekte des Nachlaufens oder des Einsaugens von Luft von Nachteil, zumindest wenn der Spenderbehälterinhalt ein relativ teures Medium ist, oder eine lange Gebrauchsfähigkeit des viskosen Mediums angestrebt wird.

Bei hoch empfindlichen und/oder teuren Medien werden auch komplexere Ausdrückmechanismen eingesetzt. Dazu weist der Spenderbehälter einen Druckkolben innerhalb eines Druckzylinders auf, wobei der Druckkolben gegenüberliegend zum Mundstück den zylinderförmigen Spenderbehälter abschließt. Der Ausdrückmechanismus weist dazu eine Druckpistole auf, mit dem der Druckkolben des Druckzylinders des Spenderbehälters über ein Gestänge mit einer Druckplatte in Wirkverbindung steht. Diese Druckplatte verschiebt bei Betätigung der Druckpistole den Druckkolben des Spenderbehälters in dem Druckzylinder in Richtung auf die Öffnung des Mundstücks, wobei das viskose Medium gezwungen wird, über die Kanüle auszutreten.

Derart aufwendige Ausdrückmechanismen werden eingesetzt, wenn es um eine genaue Dosierung des auszupressenden Anteils eines viskosen Mediums geht und/oder wenn besonders enge Kanülen mit Spitzen unter einem Millimeter Durchmesser im Querschnitt zu versorgen sind. Auch bei diesen relativ aufwendigen Ausdrückmechanismen kann ein Nachlaufen des viskosen Mediums zu hohen Verlusten und insbesondere zu ungenauer Dosierung führen. Insbesondere dann, wenn, wie bei den Tubenproblemen bereits erwähnt, kompressible Gase in dem viskosen Medium enthalten sind.

Aufgabe der Erfindung ist es, einen Spender zu schaffen, bei dem sowohl das Nachlaufen eines viskosen Mediums aus einem Spenderbehälter bzw. aus einer Spenderkanüle, als auch das Einsaugen von Luft in einen Spenderbehälter vermieden und somit die Nachteile im Stand der Technik überwunden werden. Insbesondere ist es Aufgabe der Erfindung für die Zahnmedizin einen Spender zu schaffen, der vorzugsweise Zahnzement und/oder Wurzelkanalfüllmaterialien aus engen Spenderkanülen ohne Nachlauf und/oder Rücksaugen fein dosiert zur Verfügung stellt.

Gelöst wird diese Aufgabe mit dem Gegenstand des unabhängigen Anspruchs. Vorteilhafte Weiterbildungen der Erfindung ergeben sich aus den abhängigen Ansprüchen.

Erfindungsgemäß wird ein Spender mit Spenderbehälter für viskose Medien geschaffen, der einen Spenderbehälter, einen Ausdrückmechanismus und eine Spenderkanüle aufweist. Der Spenderbehälter weist ein Mundstück auf und der Ausdrückmechanismus übt einen Druck auf das viskose Medium im Spenderbehälter aus. Unter dem Druck der Ausdrückvorrichtung wird das viskose Medium über eine Öffnung in dem Mundstück des Spenderbehälters und durch die an den Spenderbehälter angeschlossene Spenderkanüle herausgepresst. Dabei weist die Spenderkanüle einen Sitz für ein Rückhalteventil auf, das vorzugsweise zwischen dem Mundstück mit Öffnung und der Spenderkanüle angeordnet ist. Um das Rückhalteventil zu positionieren sind Spenderbehälter und Spenderkanüle vorzugsweise derart konstruiert, dass sie trennbar sind. Zum Einbau des Rückhalteventils ist dabei lediglich die Spenderkanüle von dem Spenderbehälter zu entfernen und der Spenderbehälter und die Spenderkanüle unter Anordnen des Rückhalteventils wieder zusammenzubauen. Häufig werden Spenderbehälter und Spenderkanüle getrennt gelagert, so dass ein Einbau des Rückhalteventils beim Zusammenbau unproblematisch durchgeführt werden kann.

Ein derartiger Spender hat darüber hinaus den Vorteil, dass die Öffnung in dem Mundstück vor einem Eindringen von Luft und auch vor einem Auslaufen des viskosen Mediums aus der Öffnung durch das Mundstück mit Rückhalteventil geschützt ist. Sobald der Druck des Ausdrückmechanismus nachlässt, schließt nämlich das Rückhalteventil die Öffnung im Mundstück des Spenderbehälters und dichtet somit den Spenderbehälter ab. Erst durch ein erneutes Betätigen des Andrückmechanismus geht das Rückhalteventil von seiner Schließposition in eine Öffnungsposition über und ermöglicht, dass eine fein dosierte Menge des viskosen Mediums über die Spenderkanüle abgegeben werden kann, so lange der Druck durch die Andrückvorrichtung ausgeübt wird.

Ein derartiges Rückhalteventil, das zwischen dem Mundstück mit Öffnung und der Spenderkanüle angeordnet ist, hat für alle oben erwähnten Anwendungen Vorteile, die im einzelnen nicht aufgelistet werden. Insbesondere hat dieser Spender mit Rückhalteventil einen Vorteil in der Zahnmedizin, in der relativ teure viskose Medium fein dosiert verabreicht werden müssen. Dazu weist das Rückhalteventil vorzugsweise einen Haltering und einen beweglichen Ventilkolben auf. Elastische Haltebänder zwischen Haltering und Ventilkolben halten den Ventilkolben in einer Schließposition, in der die Öffnung des Mundstücks des Spenderbehälters geschlossen ist, so lange der Ausdrückmechanismus nicht betätigt wird. Der Vorteil dieses Rückhalteventils ist es, dass es einfach herstellbar ist und beliebig verkleinert werden kann, so dass es für eine große Anzahl unterschiedlicher Spenderbehälter eines Spenders einsetzbar ist, unabhängig davon, ob der Ausdrückmechanismus handbetätigt wird, wie bei Tuben, oder für eine Feindosierung mittels einer Druckpistole betätigt wird. Der bewegliche Ventilkolben geht automatisch in die Schließposition zurück, sobald der Druck des Andrückmechanismus nachlässt.

In einer weiteren bevorzugten Ausführungsform der Erfindung weist der Ventilkolben einen Kegelstumpf zur Öffnung des Mundstücks hin auf, dessen konische Mantelfläche die Öffnung im drucklosen Zustand abdichtet. Anstelle einer konischen Mantelfläche kann auch eine Halbkugel- oder Kugelabschnittsform die Kontur des Ventilkolbens, mit der die Öffnung im Mundstück verschlossen wird, aufweisen. Die Kontur eines Kugelabschnittes oder eines Kegelmantels gewährleistet in vorteilhafter Weise, dass sich der Ventilkolben an die Öffnung des Mundstücks des Spenderbehälters auch in extremen Lagen anpassen kann. Die elastischen Haltebänder sorgen dafür, dass der bewegliche Ventilkolben mit einer vorbestimmbaren Federkraft auf dem Rand der Öffnung des Mundstücks aufliegt.

Die elastischen Haltebänder sind vorzugsweise mit einem ersten Ende an einem zylindrischen Mantel des Ventilkolbens angeordnet. Dazu geht die Kontur des Ventilkolbens von einer halbkugel- oder kugelabschnittsförmigen bzw. einer kegelstumpfförmigen Kontur in eine zylindrische Kontur über, an der das erste Ende der elastischen Haltebänder fixiert ist. Das andere Ende, bzw. das zweite Ende der elastischen Haltebänder ist an dem statisch fixierten Haltering angebracht. Dabei können die elastischen Haltebänder relativ kurz ausgeführt sein, indem sie sich radial nach außen von dem zylindrischen Mantel aus zu dem Haltering erstrecken.

Eine andere Möglichkeit besteht darin, die elastischen Haltebänder derart anzubringen, dass sich die elastischen Haltebänder tangential oder in einem stumpfen Winkel zu der Radialen nach außen von dem zylindrischen Mantel aus in Richtung auf den Haltering erstrecken. Mit abnehmendem stumpfen Winkel bis hin zur Tangente werden die elastischen Haltebänder nachgiebiger und weniger steif.

Um den Haltering statisch zu fixieren, wird der Haltering z.B. zwischen dem Mundstück und der Spenderkanüle angeordnet. Dazu weist die Spenderkanüle vorzugsweise einen Klemmsitz auf. Alternativ weisen Haltering und Spenderbehälter Mittel zur Fixierung am Spenderbehälter auf, z.B. ein Schraubgewinde, einen Luerlockverschluss, einen Bajonettverschluss oder einen Klemmverschluss. Das hat den Vorteil, dass die Spenderkanüle ausgetauscht werden kann, ohne dass der Inhalt des Spenderbehälters mit der Umgebung, z.B. Luft, in Berührung kommt.

In einer bevorzugten Ausführungsform der Erfindung ist das Rückhalteventil ein einstückig gegossenes Kunststoffteil, das den Ventilkolben, die Haltebänder und den Haltering aufweist. Mit dieser Konstruktion ist gewährleistet, dass das Rückhalteventil preiswert und in großen Mengen produziert werden kann. Damit ist weiterhin der Vorteil verbunden, dass dieses Rückhalteventil auch nachträglich in einer Vielzahl von Anwendungen, die mit viskosen Medien in einem bevorzugten Viskosebereich mit einer Viskosität κ zwischen 50 mPa/s ≤ κ ≤ 500 Pa/s arbeiten, eingesetzt werden kann.

Im eingebauten Zustand dichtet der Ventilkolben mit einer Vorspannung die Öffnung des Mundstücks des Spenderbehälters in der Schließposition ab. Um dieses zu erreichen, weist der Haltering eine Höhe auf, die geringer als die Ventilkolbenhöhe ist, so dass der Ventilkolben mit seinem Kegelstumpf bzw. seiner Halbkugel- oder Kugelabschnittsform im unbelasteten Zustand über den Ring hinausragt und somit abdichtend auf die Öffnung im Mundstück des Spenderbehälters von den elastischen Haltebändern mit einer Vorspannung gepresst wird. Durch Variation der Höhendifferenz kann der Anpressdruck, den die Haltebänder auf die Öffnung des Mundstücks ausüben, erhöht werden. Das bedeutet gleichzeitig, dass zum Auspressen des viskosen Mediums aus dem Spenderbehälter der Ausdrückmechanismus einen entsprechend höheren Druck liefern muss.

Um das Rückhalteventil zwischen Mundstück und Spenderkanüle einzuklemmen, verfügt das Mundstück des Spenderbehälters z.B. über einen Schnellverschluss. Die Spenderkanüle öffnet sich zum Mundstück hin vorzugsweise konisch, so dass die Spenderkanüle mit dem Schnellverschluss des Mundstücks unter Einklemmen des Rückhalteventils in Eingriff bringbar ist. Ein derartiger Schnellverschluss kann ein Luerlockverschluss, wie er häufig in der Zahntechnik eingesetzt wird, oder ein Bajonettverschluss oder auch ein konischer Klemmverschluss sein, dessen Verschlusskraft größer ist, als die auf ihn einwirkenden Kräfte beim Ausdrücken des viskosen Mediums aus dem Spenderbehälter.

Vorzugsweise wird der Spender mit einer feinen Spenderkanülenspitze für Zahnwurzelbehandlungen und Guttapercha Füllungen der Zahnwurzeln, oder für Zahnzementfüllungen von Zahnkavitäten ausgestattet. Dazu weist die Spenderkanüle vorzugsweise eine Spitze mit einem Außendurchmesser kleiner gleich 0,5 mm auf. Vorzugsweise ist die Spenderkanüle elastisch und biegbar. Das hat den Vorteil, dass ein Wurzelkanalfüllmaterial in die fertig präparierten Wurzelkanäle in den apikalen Teil mit Hilfe dieser feinen Spenderkanülenspitze eingebracht werden kann. Auch weitere Kanäle können mit Hilfe dieser feinen Spenderkanülenspitze mit Guttaperchamaterial verfüllt werden, so dass schließlich alle Wurzelkanäle eines Zahns aufgefüllt sind, bevor mit dem gleichen Instrument, das heißt mit dem gleichen Andrückmechanismus, jedoch mit einem anderen Spenderbehälter und einer neuen Spenderkanüle, ein Zahnzement in die Zahnkavität oberhalb der Wurzelkanäle eingebracht wird.

Für derartige zahntechnische Anwendungen weist der Spenderbehälter eine Kapsel mit zwei Kompartments für zwei Komponenten auf, die vor oder beim Ausdrückvorgang mittels Triturationsvorgang gemischt und/oder homogenisiert werden. Derartige Spenderbehälter können Zahnzement in einer Zahnzementkapsel oder Wurzelkanalfüllmaterial, vorzugsweise in einer Gutta-Flow-Kapsel aufweisen.

In einer bevorzugten Ausführungsform ist der Spenderbehälter ein starrer unelastischer Druckbehälter, der das viskose Medium in komprimierter Form enthält. Das viskose Medium ist vorzugsweise thixotrop. Im Falle des Wurzelkanalfüllmaterials ist das viskose Medium vorzugsweise eine Zusammensetzung, die Guttapercha, Nano-Silber und einen additionsvernetzenden silikonbasierten Sealer enthält. Die Guttapercha-Komponente ist vorzugsweise in Form von Pulver mit einer Korngröße kleiner als 30 µm in dem Wurzelkanalfüllmaterial enthalten. Vorzugsweise sind Sealer und Guttapercha in einem Verhältnis von 1:1 in dem Wurzelkanalfüllmaterial vorhanden.

Neben diesen Spezialanwendungen kann ein derartiges Rückhalteventil auch für Spenderbehälter vorgesehen werden, die Klebstoffe, Putzmittel, Lebensmittel und/oder Hygienemittel, wie Zahnpasta oder Cremes aufweisen, wobei der Andrückmechanismus ein Verformen einer entsprechenden Tube als Spenderbehälter umfasst. Schließlich kann als Spender auch eine Spritze für viskose Medien vorgesehen werden, die ein derartiges Rückhalteventil aufweist. Besonders vorteilhaft kann der erfindungsgemäße Spender für viskose Medien, wie Silikone, Zahnwurzelkanalfüllmaterialien oder Zahnzemente verwendet werden.

Die Erfindung wird nun anhand der beigefügten Figuren näher erläutert.
- Figur 1: zeigt einen schematischen Querschnitt durch einen Teilbereich eines Spenders gemäß einer Ausführungsform der Erfindung;
- Figur 2: zeigt eine schematische, perspektivische Ansicht eines Rückhalteventils für den Spender gemäß Figur 1;
- Figur 3: zeigt eine schematische, perspektivische Ansicht einer Variante des Rückhalteventils für den Spender gemäß Figur 1;
- Figur 4: zeigt einen schematischen Querschnitt eines Ausschnitts des Spenders, gemäß Figur 1, in einer Schließposition des Rückhalteventils;
- Figur 5: zeigt einen schematischen Querschnitt des Ausschnitts des Spenders, gemäß Figur 1, in einer Offenposition des Rückhalteventils.

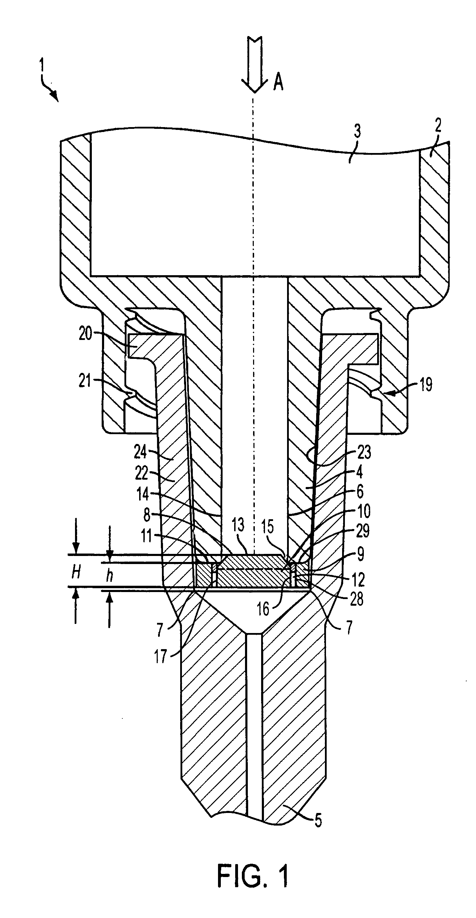

Figur 1 zeigt einen schematischen Querschnitt durch einen Teilbereich eines Spenders 1 gemäß einer Ausführungsform der Erfindung. Der Spender 1 weist einen Spenderbehälter 2 zur Aufnahme eines viskosen Mediums 3 auf. Der Spenderbehälter 2 verfügt über ein Mundstück 4, das eine Öffnung 6 aufweist, durch welche das viskose Medium 3 aus dem Spenderbehälter 2 in eine Spenderkanüle 5 gepresst werden kann. Um das viskose Medium 3 in die Spenderkanüle 5 zu pressen, verfügt der Spenderbehälter 2 über einen nicht gezeigten Kolben, auf den eine nicht gezeigte Ausdrückvorrichtung einwirkt, in der Weise, dass in Pfeilrichtung A die viskose Masse 3 in Richtung auf die Öffnung 6 in dem Mundstück 4 gepresst wird.

Zwischen dem Mundstück 4 des Spenderbehälters 2 und der Spenderkanüle 5 ist ein Rückhalteventil 8 angeordnet, das die Öffnung 6 des Mundstücks 4 mit einem beweglichen Ventilkolben 10 verschließt. Der Ventilkolben 10 weist einen Zylinderabschnitt mit einem zylindrischen Mantel 17 und einen Kegelstumpf 13 mit einer konischen Mantelfläche 15 auf. Die konische Mantelfläche 15 wird im drucklosen Zustand in einer Schließposition 14 gegen die Öffnung 6 des Mundstücks 4 gepresst, wobei elastische Haltebänder 11 und 12 den Andruck des Kegelstumpfes 13 des Ventilkolbens 10 gegen die Öffnung 6 des Mundstücks 4 bewirken. Dazu sind die elastischen Haltebänder 11 und 12 mit jeweils einem Ende 16 an dem zylindrischen Mantel 17 des Ventilkolbens 10 fixiert und mit dem anderen zweiten Ende 28 stützen sich die Haltebänder 11 und 12 an einem Haltering 9 ab, der zwischen dem Mundstück 4 des Spenderbehälters 2 und einem Sitz 7 der Spenderkanüle eingeklemmt ist.

Das Einklemmen wird dadurch bewirkt, dass ein Schnellverschluss 19 beim Aufschieben, der sich konisch erweiternden Spenderkanüle 5, auf das Mundstück 4 des Spenderbehälters 2 unter einer Drehbewegung vorgespannt wird. Bei dem in Figur 1 gezeigten Schnellverschluss 19 steht ein Flanschansatz 20 des sich konisch erweiternden Endes der Spenderkanüle 5 mit einem Innengewinde 21 des Mundstücks 4 des Spenderbehälters 2 in Eingriff, sobald das sich konisch erweiternde Ende 22 der Spenderkanüle 5 mit einem Innenkonus 24 auf einen Außenkonus 23 des Mundstücks 4 geschoben und anschließend in dem Innengewinde 21 gedreht wird. Gleichzeitig wird dabei der Haltering 9 des Rückhalteventils 8 zwischen dem Klemmsitz 7 der Spenderkanüle 5 und dem Mundstück 4 des Spenderbehälters 2 eingeklemmt und fixiert.

Der Zwischenraum 29 zwischen dem Haltering 9 und dem Ventilkolben 10 wird nicht vollständig durch die Haltebänder 11 und 12 in Anspruch genommen, so dass ein freier Zwischenraum 29 besteht, durch den in einer Offenposition des Ventilkolbens 10 bei Ausüben eines Druckes in Pfeilrichtung A das viskose Medium von dem Spenderbehälter 2 in die Spenderkanüle 5 passieren kann. Sobald der Druck in Pfeilrichtung A auf das viskose Medium zurückgeht, verschließt der durch die Haltebänder 11 und 12 vorgespannte Ventilkolben 10 die Öffnung 6 des Mundstücks 4, indem der Ventilkolben 10 automatisch durch die Federkraft der Haltebänder 11 und 12 in die Schließposition 14 zurückkehrt. Dadurch wird ein Nachtropfen des viskosen Mediums oder ein Nachlaufen des viskosen Mediums aus der Öffnung 6 des Mundstücks 4 des Spenderbehälter 2 verhindert, und gleichzeitig auch verhindert, dass Luft in den Spenderbehälter 2 eindringen kann.

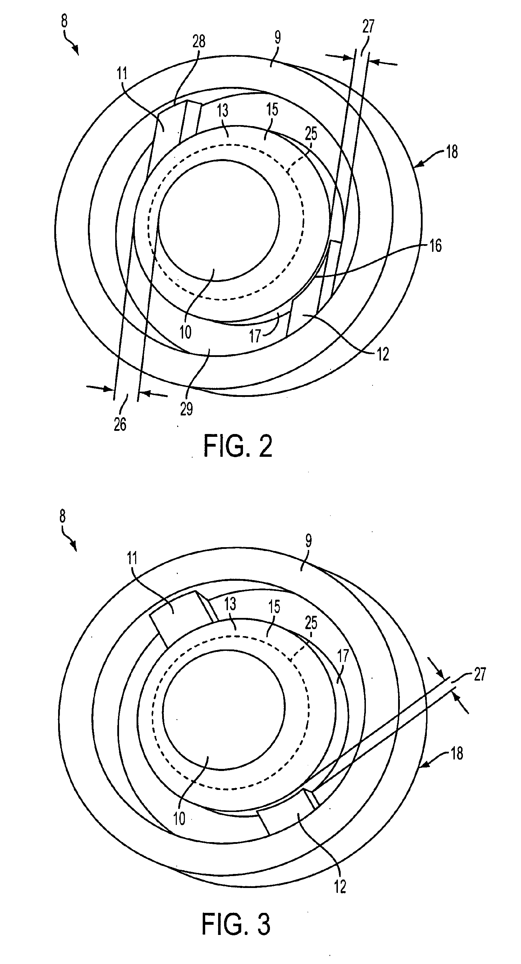

Figur 2 zeigt eine schematische, perspektivische Ansicht eines Rückhalteventils 8 aus einem einstückigen, gegossenen Kunststoffteil 18 für den Spender 1, wie er in Figur 1 gezeigt wird. Der Haltering 9 umgibt einen Ventilkolben 10, der einen Kegelstumpfbereich 26 und ein zylindrischen Bereich 27 aufweist. Auf dem Kegelstumpfbereich 26 wird durch eine strichpunktierte Linie 25 die Spur, der in Figur 1 gezeigten Öffnung 6 des Mundstücks 4 gezeigt, mit der das in Figur 1 gezeigte Mundstück 4 auf dem Ventilkolben 10 in einer Schließposition aufliegt. Die Haltebänder 11 und 12 sind mit ihrem ersten Ende 16 in dem Zylinderbereich 27 des Ventilkolbens 10 fixiert und stützen sich mit ihrem zweiten Ende 28 an dem Haltering 9 ab. Der Zwischenraum 29 bleibt somit frei für den Durchgang des viskosen Mediums 3, sobald der Ventilkolben 10 die Schließposition verlässt. In dieser Ausführungsform der Erfindung sind die elastischen Haltebänder 11 und 12 tangential an dem Ventilkolben 10 fixiert.

Figur 3 zeigt eine schematische, perspektivische Ansicht einer Variation des Rückhalteventils 8 gemäß Figur 2. Komponenten mit gleichen Funktionen wie in Figur 2 werden in Figur 3 mit gleichen Bezugszeichen gekennzeichnet und nicht extra erörtert. Der Unterschied dieser Variation des Rückhalteventils 8 besteht darin, dass das einstückige Rückhalteventil 8, das einen Haltering 9, Haltebänder 11 und 12 und einen Ventilkolben 10 aufweist, eine gegenüber Figur 2 unterschiedliche Anordnung der Haltebänder 11 und 12 aufweist. Bei dieser Variante erstrecken sich die Haltebänder 11 und 12 radial von dem Zylinderbereich 27 des Ventilkolbens 10 in Richtung auf den Haltering 9. Damit sind die Haltebänder 11 und 12 in Figur 3 kürzer als in Figur 2, so dass bei gleichen Materialeigenschaften der Rückhalteventile 8 das Rückhalteventil 8 der Figur 3 steifer ist, als das der Figur 2.

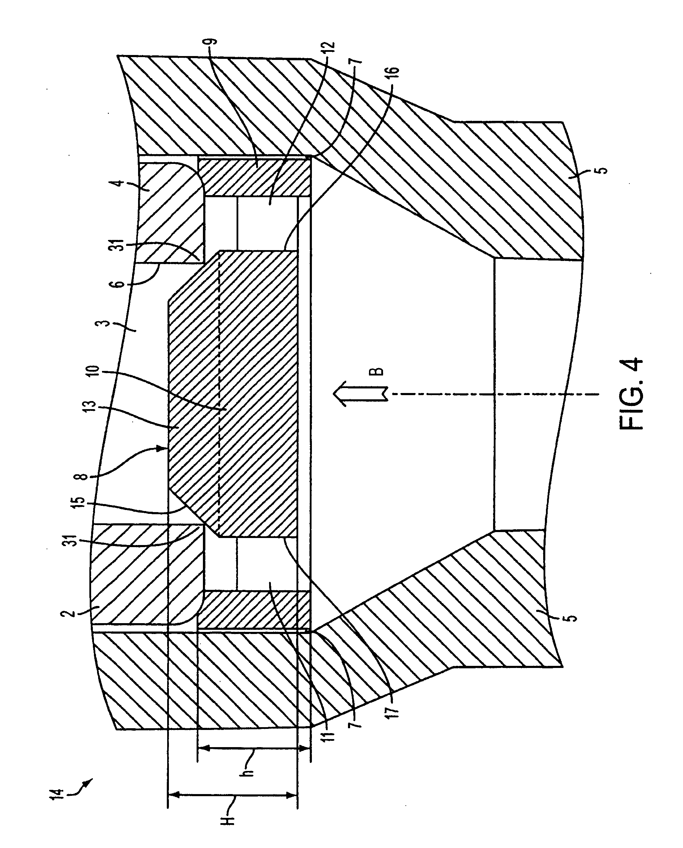

Figur 4 zeigt einen schematischen Querschnitt eines Ausschnitts des Spenders 2, gemäß Figur 1, in einer Schließposition 14 des Rückhalteventils 8. Komponenten mit gleichen Funktionen wie in den vorhergehenden Figuren werden mit gleichen Bezugszeichen gekennzeichnet und nicht extra erörtert. Die Höhe h des zwischen dem Klemmsitz 7 der Spenderkanüle 5 und dem Mundstück 4 des Spenderbehälters 2 eingeklemmten Halteringes 9 ist geringer, als die Höhe H des Ventilkolbens 10. Dadurch kann der Ventilkolben 10 in die Öffnung 6 des Mundstücks 4 des Spenderbehälters 2 hineinragen. Außerdem können die elastischen Haltebänder 11 und 12 eine Federkraft in Pfeilrichtung B auf den Ventilkolben 10 ausüben, so dass der Ventilkolben 10 in der Schließposition 14 gegen den Rand 31 der Öffnung 6 des Mundstücks 4 gepresst wird.

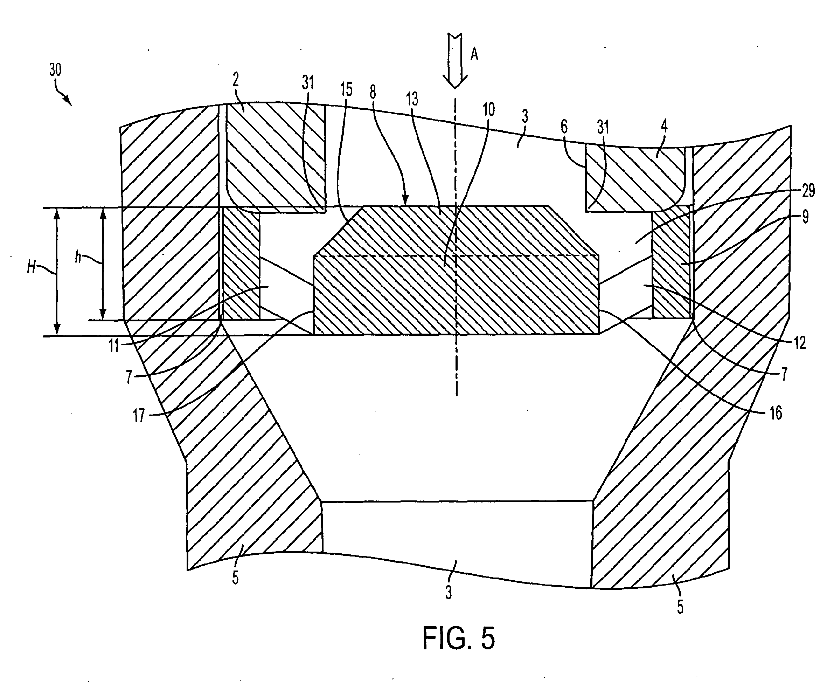

Figur 5 zeigt einen schematischen Querschnitt des Ausschnitts des Spenders 1, gemäß Figur 1, in einer Offenposition 30 des Rückhalteventils 8. Wenn auf das viskose Medium 3 ein höherer Druck in Richtung A ausgeübt wird, als es die Rückstellkraft der elastischen Haltebänder 11 und 12 ermöglicht, so wird der Ventilkolben 10 in Pfeilrichtung A in die Offenposition 30 gedrückt und das viskose Medium 3 kann über den Zwischenraum 29 in die Spenderkanüle 5 gelangen. Sobald jedoch der Druck in Richtung A nachlässt, gehen die elastischen Haltebänder 11 und 12 zurück, und der Ventilkolben 10 verschließt die Öffnung 6 des Mundstücks 4 des Spenderbehälters 2, so dass ein Nachlaufen des viskosen Mediums unterbunden wird. Gleichzeitig wird auch das Eindringen von Luft in den Spenderbehälter und damit in das viskose Medium 3 verhindert, sobald der Ventilkolben 10 aus der hier gezeigten Offenposition 30 in die in Figur 4 gezeigt Schließposition 14 zurückgeschoben ist. Ein derartiges Rückhalteventil 8 kann im Prinzip ohne große Umbauten in allen Spendern eingesetzt werden und damit einen Beitrag zum sparsamen Umgang mit teuren viskosen Medien ermöglichen.

### Bezugszeichen-Liste

- 1: Spender
- 2: Spenderbehälter
- 3: viskoses Medium
- 4: Mundstück
- 5: Spenderkanüle
- 6: Öffnung im Mundstück
- 7: Sitz
- 8: Rückhalteventil
- 9: Haltering
- 10: Ventilkolben
- 11: Halteband
- 12: Halteband
- 13: Kegelstumpf
- 14: Schließposition
- 15: konische Mantelfläche
- 16: Ende vom Halteband
- 17: zylindrischer Mantel
- 18: einstückiges Kunststoffteil
- 19: Schnellverschluss
- 20: Flanschansatz
- 21: Innengewinde
- 22: konischer Ende
- 23: Außenkonus
- 24: Innenkonus
- 25: strichpunktierte Linie
- 26: Kegelstumpfbereich
- 27: Zylinderbereich
- 28: zweites Ende
- 29: Zwischenraum
- 30: Offenposition

- 31: Rand

- A: Pfeilrichtung
- B: Pfeilrichtung
- h: Höhe des Halterings
- H: Ventilkolbenhöhe

## Patentansprüche

1. Spender mit einem Spenderbehälter (2) für viskose Medien (3), der ein Mundstück (4) aufweist, einem Ausdrückmechanismus und einer Spenderkanüle (5), wobei der Ausdrückmechanismus einen Druck auf das viskose Medium (3) im Spenderbehälter (2) ausübt und das viskose Medium (3) über eine Öffnung (6) in dem Mundstück (4) des Spenderbehälters (2) und durch die Spenderkanüle (5) herauspresst, wobei die Spenderkanüle (5) von dem Spenderbehälter (2) entfernbar ist, und wobei die Spenderkanüle (5) einen Sitz (7) für ein Rückhalteventil (8) aufweist, das zwischen dem Mundstück (4) mit Öffnung (6) und der Spenderkanüle (5) angeordnet ist.

2. Spender nach Anspruch 1,
**dadurch gekennzeichnet, dass**
das Rückhalteventil (8) einen Haltering (9) und einen beweglichen Ventilkolben (10) aufweist, wobei elastische Haltebänder (11, 12) zwischen Haltering (9) und Ventilkolben (10) angeordnet sind, die den Ventilkolben (10) in einer Schließposition (14) halten, in der die Öffnung (6) des Mundstücks (4) des Spenderbehälters (2) geschlossen ist.

3. Spender nach Anspruch 2,
**dadurch gekennzeichnet, dass**
der Ventilkolben (10) einen Kegelstumpf (13) zum Mundstück (4) hin aufweist, dessen konische Mantelfläche (15) die Öffnung (6) im drucklosen Zustand abdichtet.

4. Spender nach Anspruch 2 oder Anspruch 3,
**dadurch gekennzeichnet, dass**
die elastischen Haltebänder (11, 12) mit einem ersten Ende (16) an einem zylindrischen Mantel (17) des Ventilkolbens (10) angeordnet sind und sich radial nach außen von dem zylindrischen Mantel (17) aus zu dem Haltering (9) erstrecken.

5. Spender nach Anspruch 2 oder Anspruch 3,
**dadurch gekennzeichnet, dass**
die elastischen Haltebänder (11, 12) mit einem ersten Ende (16) an einem zylindrischen Mantel (17) des Ventilkolbens (10) angeordnet sind und sich tangential oder in einem stumpfen Winkel zu der Radialen nach außen von dem zylindrischen Mantel (17) aus zu dem Haltering (9) erstrecken.

6. Spender nach einem der Ansprüche 2 bis 5,
**dadurch gekennzeichnet, dass**
der Haltering (9) zwischen dem Mundstück (4) und der Spenderkanüle (5) angeordnet ist.

7. Spender nach einem der Ansprüche 2 bis 6,
**dadurch gekennzeichnet, dass**
der Haltering (9) beim Anbringen der Spenderkanüle (5) an das Mundstück (4) des Spenderbehälters (2) einen Klemmsitz (7) einnimmt.

8. Spender nach einem der Ansprüche 2 bis 7,
**dadurch gekennzeichnet, dass**
ein einstückiges Kunststoffteil (18) den Ventilkolben (10), die Haltebänder (11, 12) und den Haltering (9) aufweist.

9. Spender nach einem der Ansprüche 2 bis 8,
**dadurch gekennzeichnet, dass**
im eingebauten Zustand der Ventilkolben (10) mit einer Vorspannung die Öffnung (6) des Mundstücks (4) des Spenderbehälters (2) in der Schließposition (14) abdichtet.

10. Spender nach einem der Ansprüche 2 bis 9,
**dadurch gekennzeichnet, dass**
der Haltering (9) eine Höhe (h) aufweist, die geringer als die Ventilkolbenhöhe (H) ist, und der Ventilkolben (10) mit einem Kegelstumpf (13) im unbelasteten Zustand über den Haltering hinausragt.

11. Spender nach einem der vorhergehenden Ansprüche,
**dadurch gekennzeichnet, dass**
an dem Mundstück (4) ein Schnellverschluss (19) angeordnet ist und sich die Spenderkanüle (5) zum Mundstück (4) hin konisch öffnet, und die Spenderkanüle (5) mit dem Schnellverschluss (14) des Mundstücks (4) unter Einklemmen des Rückhalteventils (8) in Eingriff bringbar ist.

12. Spender nach einem der vorhergehenden Ansprüche,
**dadurch gekennzeichnet, dass**
die Spenderkanüle (5) für Zahnwurzelbehandlungen und Guttapercha Füllungen der Zahnwurzeln oder für Zahnzementfüllungen von Zahnkavitäten geeignet ist und an ihrer Spitze einen Außendurchmesser kleiner gleich 0,5 mm aufweist.

13. Spender nach einem der vorhergehenden Ansprüche,
**dadurch gekennzeichnet, dass** der Spenderbehälter (2) eine Kapsel mit zwei Kompartments für zwei Komponenten aufweist, die vor oder beim Ausdrückvorgang mittels Triturationsvorgang gemischt und/oder homogenisiert sind.

14. Spender nach einem der vorhergehenden Ansprüche,
**dadurch gekennzeichnet, dass**
der Spenderbehälter (2) eine Zahnzementkapsel aufweist.

15. Spender nach einem der vorhergehenden Ansprüche,
**dadurch gekennzeichnet, dass**
der Spenderbehälter (2) eine Kapsel für Wurzelkanalfüllmaterial vorzugsweise eine Gutta-Flow-Kapsel aufweist.

16. Spender nach einem der vorhergehenden Ansprüche,
**dadurch gekennzeichnet, dass**
der Spenderbehälter (2) einen Schnellverschluss vorzugsweise einen Luerlockverschluss als Mundstück aufweist.

17. Spender nach einem der vorhergehenden Ansprüche,
**dadurch gekennzeichnet, dass**
der Spenderbehälter (2) einen Druckzylinder mit einem Druckkolben aufweist, wobei eine Druckpistole mit dem Druckkolben über ein Gestänge mit Druckplatte in Wirkverbindung steht.

18. Spender nach einem der vorhergehenden Ansprüche,
**dadurch gekennzeichnet, dass**
der Spenderbehälter (2) eine Klebstofftube, eine Putzmitteltube, eine Lebensmitteltube oder eine Hygienemitteltube für Zahnpasta oder Cremes ist und der Andruckmechanismus ein Verformen der Tube verursacht.

19. Spender nach einem der vorhergehenden Ansprüche,
**dadurch gekennzeichnet, dass**
der Spender (1) eine Spritze für viskose Medien (3) ist.

20. Verwendung des Spenders zur Verarbeitung viskoser Medien (3) mit einer Viskosität κ zwischen 50 mPa/s ≤ κ ≤ 500 Pa/s.

21. Verwendung des Spenders nach Anspruch 20,
**dadurch gekennzeichnet, dass**
als viskose Medien Silikone, Zahnwurzelkanalfüllmaterialien oder Zahnzemente verwendet werden.
